# EUROPEAN PATENT APPLICATION

(11) **EP 3 177 027 A1**
(43) Date of publication of application: **07.06.2017**
(21) Application number: 16201710.7
(22) Date of filing: 01.12.2016
(51) Int. Cl.: H04N 21/442

(54) **MULTIMEDIA CONTENT RECOMMENDATIONS BASED ON CONSUMPTION VELOCITY**

(30) Priority: 03.12.2015 US 201514957711
(71) Applicant: Thomson Licensing, 92130 Issy-les-Moulineaux (FR)
(72) Inventor: ASHKAN, Azin, Los Altos, CA California 94022 (US); ERIKSSON, Brian Charles, Los Altos, CA California 94022 (US); BOLOT, Jean, Los Altos, CA California 94022 (US)
(74) Representative: Huchet, Anne

(57) **Abstract**

Consumption of multimedia content within a given user network is tracked to enable recommendations for consumption of multimedia content to users of the user network. A consumption velocity of each node in the given user network is identified. A recommendation is then transmitted to at least one node in the given user network, based at least partially on the consumption velocity.

## Description

### FIELD

The present principles relate to multimedia content. More particularly, the present principles relate to recommendations based on a rate of consumption of multimedia content.

### BACKGROUND

Video on demand ("VOD") allows users to consume multimedia content at any time that is convenient for the user. VOD services may be used in conjunction with mobile devices, such as laptops, mobile phones, or tablets. Some multimedia content consumers may have friends with whom they can discuss the latest episodes of their favorite shows. These discussions may take place on social networking platforms.

Oftentimes, a multimedia content consumer is not aware that one of their friends also consumed a similar show, until they see hints on a social network (e.g., comments or a posting of a clip of the show, etc.). Furthermore, some may feel excluded from their social network, when they are not privy to subplots and characters of a particular program, discussed by their friends online. In this instance, the person may try to compensate by "binge watching" episodes on VOD, only to find that they are too far behind to catch up to their friends in a reasonable amount of time.

### SUMMARY

The proposed apparatus relates to device that generates viewing recommendations for users of a user network, the recommendations being based on a consumption velocity for multimedia content. According to a first aspect of the invention, the apparatus can comprise an interface with circuitry to communicate with a multimedia content provider network, a storage device to maintain user networking data, and at least one processor. The processor is configured to: track, using the interface, consumption of multimedia content within a plurality of nodes of a given user network of the user networking data, stored in the storage device, identify a consumption velocity of each node in the given user network, and transmit a recommendation based at least partially on the consumption velocity for the multimedia content, to at least one node in the given user network. An example of a user network may include a social network.

In another embodiment of the apparatus, the recommendation comprises a message to encourage competition for the consumption velocity of the multimedia content within the given user network.

In another embodiment of the apparatus, the at least one processor of the apparatus can transmit the recommendation, for example, in a private newsfeed.

In another embodiment of the apparatus, the at least one processor is further configured to communicate an incentive to increase the consumption velocity of the multimedia content.

In another embodiment of the apparatus, each node in the given user network can comprise a multimedia device associated with a multimedia content consumer.

In another aspect of the invention, a method can comprise: tracking, using at least one processor, consumption of multimedia content within a plurality of nodes of a given user network of user networking data stored in a storage device, identifying, using the at least one processor, a consumption velocity of each node in the given user network, and transmitting, using the at least one processor, a recommendation based at least partially on the consumption velocity for the multimedia content, to at least one node in the given user network.

In another embodiment of the method, the recommendation comprises a message to encourage competition for the consumption velocity of the multimedia content within the given user network.

In another embodiment of the method, the at least one processor of the apparatus can transmit the recommendation, for example, in a private newsfeed.

In another embodiment of the method, the at least one processor is further configured to communicate an incentive to increase the consumption velocity of the multimedia content.

In another embodiment of the method, each node in the given user network can comprise a multimedia device associated with a multimedia content consumer.

In another aspect of the invention, a non-transitory computer readable medium can contain instructions which, when executed, cause at least one processor to: track, using an interface, consumption of multimedia content within a plurality of nodes of a given user network of user networking data stored in a storage device, identify a consumption velocity of each node in the given user network, and transmit a recommendation based at least partially on the consumption velocity for the multimedia content, to at least one node in the given user network.

In another embodiment of the non-transitory computer readable medium executable instructions, the recommendation comprises a message to encourage competition for the consumption velocity of the multimedia content within the given user network.

In another embodiment of the non-transitory computer readable medium executable instructions, the at least one processor of the apparatus can transmit the recommendation, for example, in a private newsfeed.

In another embodiment of the non-transitory computer readable medium executable instructions, the at least one processor is further configured to communicate an incentive to increase the consumption velocity of the multimedia content.

In another embodiment of the non-transitory computer readable medium executable instructions, each node in the given user network can comprise a multimedia device associated with a multimedia content consumer.

Thus, the techniques disclosed herein allow multimedia consumers to receive content recommendations based, at least partially, on the consumption of multimedia content by their friends. In turn, a user can stay informed of different plots and characters of a program and can participate in discussions about the program on line. The aspects, features and advantages of the present principles will be appreciated when considered with reference to the following description of examples and accompanying figures. The following description does not limit the application, rather, the scope of the present principles is defined by the appended claims and equivalents.

### BRIEF DESCRIPTION OF THE DRAWINGS

The proposed apparatus and method is best understood from the following detailed description when read in conjunction with the accompanying drawings. The drawings include the following figures briefly described below:
**FIG. 1** is an exemplary apparatus in accordance with an embodiment of the present principles.
**FIG. 2** is a flow diagram of an exemplary method in accordance with an embodiment of the present principles.
**FIG. 3** is a working example in accordance with an embodiment of the present principles.
**FIG. 4** is a working example of recommendations in accordance with an embodiment of the present principles.
**FIG. 5** is a working example of recommendations in a private news feed in accordance with an embodiment of the present principles.

It should be understood that the drawing(s) are for purposes of illustrating the concepts of the disclosure and is not necessarily the only possible configuration for illustrating the disclosure.

### DETAILED DESCRIPTION

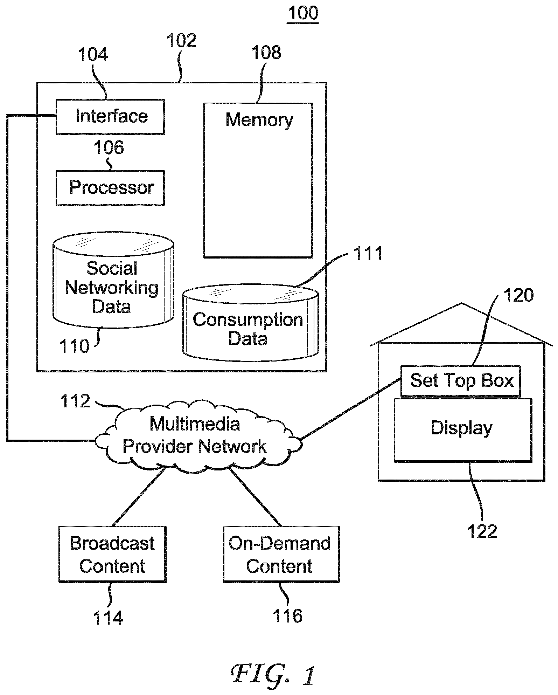

**FIG. 1** presents an exemplary diagram 100 of an illustrative computer apparatus 102 for executing the techniques disclosed herein. Computer apparatus 102 can comprise any device capable of processing instructions and transmitting data to and from other computers, including a laptop, a full-sized personal computer, a high-end server and/or a network computer lacking local storage capability. Computer apparatus 102 can include all the components normally used in connection with a computer. For example, the computer apparatus can have a keyboard and mouse and/or various other types of input devices such as pen-inputs, joysticks, buttons, touch screens, etc., as well as a display, which could include, for instance, a cathode ray tube (CRT), liquid crystal display (LCD), plasma screen monitor, TV, projector, etc.

Computer apparatus 102 can also contain at least one processor that can be arranged as different processing cores. For ease of illustration, one processor 106 is shown in FIG. 1, but it is understood that multiple processors can be employed simultaneously. Processor 106 can be any number of well-known processors, such as processors from Intel® Corporation. In another example, processor 106 can be an application specific integrated circuit ("ASIC"). Processor 106 can be implemented as a hardware processor, a digital signal processor ("DSP"), an ASIC, a field programmable gate array ("FPGA") or other programmable logic devices, a discrete gate or transistor logic device, a discrete hardware component, or any other combination of processing circuitry. Processor 106 can also be implemented as a combination of computation devices, such as a combination of a DSP and a microprocessor, a plurality of microprocessors, one or more microprocessors in communication with the DSP or any other such configuration.

Memory 108 can be any type of memory capable of storing information accessible by processor 106 including, but not limited to, a memory card, read only memory ("ROM"), random access memory ("RAM"), as well as other write-capable and read-only memories. Computer apparatus 102 can include different combinations of the foregoing, whereby different portions of the instructions and data are stored on different types of media.

In another example, memory 108 can be a non-transitory computer readable medium that can include any computer readable media with the exception of a transitory, propagating signal. Examples of non-transitory computer readable media can include one of many physical media such as, for example, electronic, magnetic, optical, electromagnetic, or semiconductor media. More specific examples of suitable non-transitory computer-readable media include, but are not limited to, a portable magnetic computer diskette such as floppy diskettes or hard drives, an erasable programmable read-only memory, a portable compact disc or other storage devices that can be coupled to computer apparatus 102 directly or indirectly. The non-transitory computer readable media can also include any combination of the foregoing and/or other devices as well. While only one memory 108 is shown in FIG. 1, computer apparatus 102 can actually comprise additional memories that may or may not be stored within the same physical housing or location.

Network interface device 104 can include hardware components (e.g., chipsets, controllers, antennas, *etc*.) and/or software that allow computer apparatus 102 to communicate with other computers via a network, such as a local area network ("LAN"), wide area network ("WAN"), the Internet, etc. Network interface device 104 can support one or more various protocols including virtual private networks, local Ethernet networks, and private networks using communication protocols proprietary to one or more companies, cellular and wireless networks, hypertext transfer protocol (HTTP), and various combinations of the foregoing. In the example of FIG. 1, computer apparatus 102 communicates with a multimedia content provider network 112. Although all the components of computer apparatus 102 are functionally illustrated as being within the same block, it will be understood that the components may or may not be stored within the same physical housing or location.

Multimedia content provider network 112 can transmit multimedia content to set top box 120. The system can provide broadcast content 114, VOD content 116 and other interactive features, which can be delivered using Internet Protocol television ("IPTV"). Computer apparatus 102 can track the consumption velocity of each node of a given social network in social networking database 110. The consumption velocities can be stored in consumption database 111. Each node in the social networking data can be a multimedia device, such as set top box 120, associated with a multimedia content consumer. As such, social networking database 110 can enable social networking features in the multimedia content provider network 112. Although the architecture of social networking database 110 and consumption database 111 are not limited by any particular data structure, the data therein can be stored in computer registers, in a relational database as a table having a plurality of different fields and records, extensible markup language (XML) documents or flat files. The data can also be formatted in any computer-readable format. The data can comprise any information sufficient to identify the relevant information, such as numbers, descriptive text, proprietary codes, references to data stored in other areas of the same memory or different memories (including other network locations) or information that is used by a function to calculate the relevant data.

A set top box 120 can comprise suitable circuitry to read signals from the multimedia content provider network 112 and output displayable information to the display 122. The set top box 120 can be a cable converter or digital television adapter. The source of the signal from multimedia provider network 112 can include, but is not limited to, an Ethernet cable, a satellite dish, a coaxial cable, a telephone line, and/or broadband over power lines. Set top box 120 can be configured to access multiple television delivery methods including, but not limited to, terrestrial, cable, Internet, satellite or a combination of the foregoing, and can also be enabled to access broadcast content 114 and VOD content 116. The set top box 120 can connect to display 122 in a wired or wireless configuration. In a wired configuration, set top box 120 can be connected to display 122 using, for example, a high definition multimedia interface (HDMI) port.

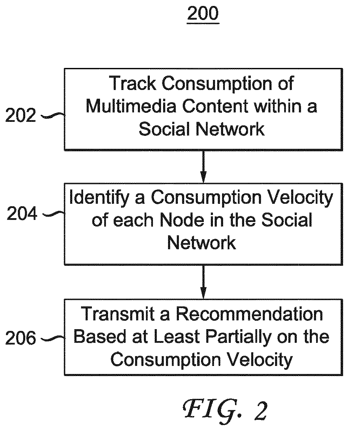

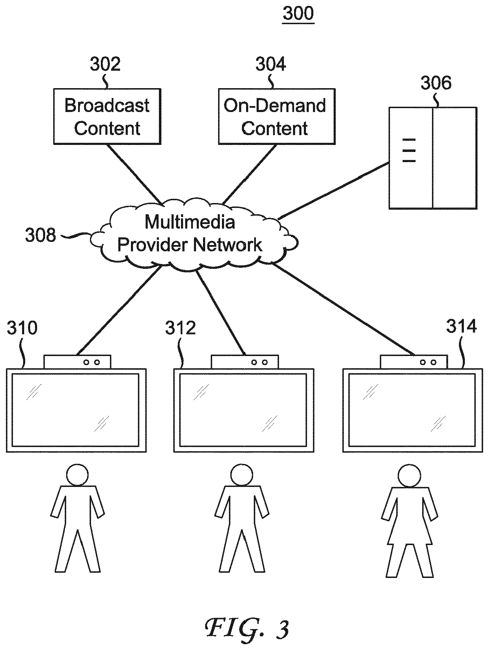

Working examples of the apparatus, method, and non-transitory computer readable medium are shown in FIGS. 2-5. In particular, **FIG. 2** is a flow diagram of an exemplary method 200 for providing recommendations based on consumption velocity in accordance with an embodiment of the present principles. FIGS. 3-5 show working examples in accordance with an embodiment of the present principles. The actions shown in FIGS. 3-5 will be discussed below with regard to the flow diagram of FIG. 2.

Referring now to FIG. 2, consumption of multimedia content within a given social network is tracked, as shown in block 202. Referring now to **FIG. 3**, a working example of tracking multimedia consumption is shown. In FIG. 3, an exemplary diagram 300 shows three social network nodes: node 310, node 312 and node 314. While only three nodes are shown in FIG. 3, it is understood that a social network can include additional or fewer nodes and that the three nodes are shown for ease of illustration. Each node can receive multimedia content from multimedia content provider network 308. The content can be broadcast content 302 or VOD content 304. A tracking server 306, whose architecture can be similar to that of computer apparatus 102 of FIG. 1, can track the consumption of node 310, node 312 and node 314. The users of each node can be linked via a social network stored in tracking server 306 (*e.g*., social networking database 110 of FIG. 1). While FIG. 3 illustrates each node (310, 312, 314) in the social network as a set top box, it is understood that each node (310, 312, 314) can comprise a mobile device (*e.g*., a smart phone, a tablet, a laptop, *etc*.) enabled to stream multimedia content from multimedia content provider network 308. In this instance, the mobile device can be a node on the social network and the consumption of content via the mobile device can be tracked for a recommendation.

Referring back to FIG. 2, a consumption velocity of each node in the social network can be identified, as shown in block 204, the consumption velocity referring to the number of particular programs a user consumes within a given interval. In FIG. 3, tracking server 306 can monitor broadcast content 302 and VOD content 304 transmitted or streamed to each node. The content can be, for example, episodes of a program. However, it is understood that the content can include in other type of content including, but not limited to, sports, news, live concerts etc. For example, the techniques herein can be used to track how many games of a favorite sports team have been watched by each node of the network.

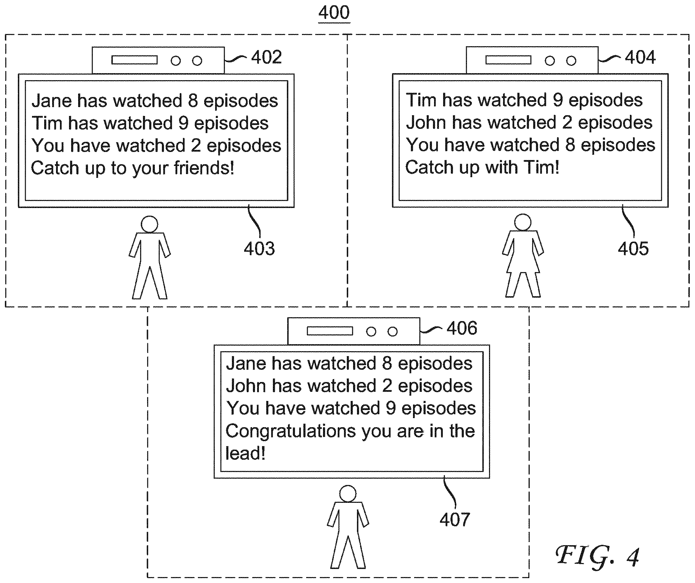

Referring back to FIG. 2, a recommendation can be transmitted to at least one node in the social network, based, at least partially, on the consumption velocity of at least one node in the social network, as shown in block 206. Referring now to an exemplary diagram 400 of **FIG. 4**, node 402, 404 and node 406 are shown with recommendations rendered on their respective displays 403, 405 and 407. For ease of illustration, the users 408, 410, 412 associated with each node of FIG. 4 form a complete social network (again, there can be fewer or more users in the social network). In this example, the recommendation comprises a message to encourage consumption velocity competition within the social network. In each message, the consumption velocity of each node in the social network is provided. In the example of FIG. 4, each user is made aware of how many episodes of a program were watched by each friend in their social network within a given period of time and how they rank among their friends. While FIG. 4 shows the recommendations rendered on a television screen, it is understood that the recommendations can also be rendered on a mobile device. In a further example, incentives, such as discounts or coupons, can be transmitted to a node in the social network to increase their consumption velocity.

In addition to the above, the recommendation can be a group incentive to motivate a social network to watch programming together. In this instance, group discounts can be provided such that the cost of watching VOD programming together is less expensive for each member of a social network than watching the program individually. For example, group incentives can be offered to the users 408, 410, 412 of node 402, node 404 and node 406, respectively, of FIG. 4.

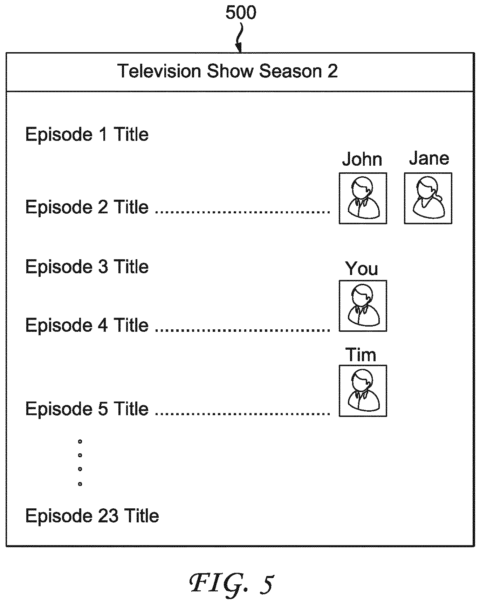

In another embodiment, the recommendations can be provided in a private newsfeed. In one example, a private news feed can include a page of a television show displayed in a personal VOD account. Referring now to **FIG. 5**, an illustrative screen shot 500 of a private newsfeed is shown. Here, a page of a TV show in a VOD account can render profile pictures 502-508 of friends beside each episode they have watched. Thus, the consumption of each user can be integrated into the private newsfeed of a particular program. In yet another embodiment, the profile pictures 502-508 can be disseminated via other means such as via email, social network postings and other media dissemination techniques, both temporary and permanent.

Advantageously, the above-described apparatus, non-transitory computer readable medium, and method allow multimedia consumers to receive content recommendations based on the consumption velocity of friends in their social network. In turn, a user can stay informed of different plots and characters in a program and be able to participate in discussions with their friends. In this regard, an apparatus can monitor the consumption of each user in the social network and provide recommendations based at least partially on the tracked consumption.

Although the present principles herein have been described with reference to particular examples, it is to be understood that these examples are merely illustrative of the present principles. It is therefore to be understood that numerous modifications can be made to the examples and that other arrangements can be devised without departing from the scope of the present principles as defined by the appended claims. Furthermore, while particular processes are shown in a specific order in the appended drawings, such processes are not limited to any particular order unless such order is expressly set forth herein. Rather, various steps can be handled in a different order or simultaneously, and steps can be omitted or added.

## Claims

1. An apparatus, comprising:
an interface (104) including circuitry configured to communicate with a multimedia content provider network (112);
a storage device configured to maintain user networking data (110); and
at least one processor (106) configured to:
track consumption (111) of multimedia content within a plurality of nodes (120) of a user network whose user networking data is maintained in the storage device; and
transmit a recommendation to at least one node in the plurality of nodes, wherein the recommendation is at least partially based on a consumption velocity for the multimedia content.

2. The apparatus of claim 1, wherein the recommendation comprises a notification to encourage competition for consumption velocity of the multimedia content within the user network.

3. The apparatus according to any one of claims 1 or 2, wherein the recommendation is transmitted in a newsfeed.

4. The apparatus according to any one of claims 1 to 3, wherein the at least one processor is further configured to communicate an incentive to increase consumption velocity of the multimedia content to the at least one node of the user network.

5. The apparatus according to any one of claims 1 to 4, wherein each node in the user network comprises a multimedia device associated with a multimedia content consumer.

6. A method, comprising:
tracking (202) consumption of multimedia content within a plurality of nodes of a user network stored in a storage device; and
transmitting (206) a recommendation to at least one node of the plurality of nodes, wherein the recommendation is at least partially based on a consumption velocity for said multimedia content.

7. The method of claim 6, wherein the recommendation comprises a notification to encourage competition for consumption velocity of the multimedia content within the user network.

8. The method according to any one of claims 6 or 7, wherein the recommendation is transmitted in a newsfeed.

9. The method according to any one of claims 6 to 8, further comprising communicating an incentive to increase consumption velocity of said multimedia content to the at least one node of the user network.

10. The method according to any one of claims 6 to 9, wherein each node in the user network comprises a multimedia device associated with a multimedia content consumer.

11. A non-transitory computer readable medium with instructions stored therein which, when executed, cause at least one processor to carry out the method according to any one of claims 6-10.

12. A computer program comprising software code instructions for performing the method according to any one of claims 6-10, wherein the computer program is executed by one or more processors.
